(19) Europäisches Patentamt
European Patent Office
Office européen des brevets

(11) **EP 2 090 848 A1**

(12) **EUROPEAN PATENT APPLICATION**
published in accordance with Art. 153(4) EPC

(43) Date of publication:
**19.08.2009 Bulletin 2009/34**

(51) Int Cl.:
**F24J 2/54** (2006.01)

(21) Application number: **07866342.4**

(22) Date of filing: **04.12.2007**

(86) International application number:
**PCT/ES2007/000712**

(87) International publication number:
**WO 2008/068369 (12.06.2008 Gazette 2008/24)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **05.12.2006 ES 200603109**

(71) Applicant: **Soltec Energías Renovables, SL 30500 MOLINA DE SEGURA (Murcia) (ES)**

(72) Inventors:
• **GRANT, Thomas**
**E-30500 MOLINA DE SEGURA (Murcia) (ES)**
• **MORALES TORRES, Raul**
**E-30500 MOLINA DE SEGURA (Murcia) (ES)**

(74) Representative: **Gislon, Gabriele**
**Torner, Juncosa i Associats, S.L.**
**C/Gran Via de les Corts Catalanes, 669bis 1è 2o**
**08013 Barcelona (ES)**

(54) **BIAXIAL SOLAR TRACKER**

(57) The invention comprises a fixed platform (1) bearing a circular rail (2), supporting rolling elements to which is attached a mobile frame (4) with a sloping structure (5) which holds a number of solar panels (P), grouped in rows (H), the panels (P) of each row (H) being connected to corresponding support shafts (E1-E4), supported on said sloping structure (5), and means for moving the frame (4) and shafts (E1-E4) in accordance with a predetermined configuration. The frame (4) includes a base (B) with attached thereto said rolling elements and the sloping structure (5) is raised above said base (B), at a distance from the fixed platform (1) and formed by two supporting beams (6, 7) that delimit an oblique plane and are separated from each other by a distance greater than the diameter of the rail (2).

Fig. 5

EP 2 090 848 A1

**Description**

<u>Technical Field</u>

The present invention relates to the field of photovoltaic solar installations intended for using solar energy by means of its direct conversion into electric power, and more specifically it relates to those installations based on active solar trackers, i.e., on orientable dual-axis support structures, with controlled movement very precisely synchronized with the position of the sun in every moment and incorporating or grouping a plurality of photovoltaic modules or panels. The support structure of the tracker allows, by means of the coordinated movement of several of its parts, tracking the route of the sun from when it rises in the East to when it sets in the West, enabling the solar panels to always be directly facing the sun.

<u>Prior State of the Art</u>

Different proposals are known in relation to solar trackers, also known as solar orienting devices which, for the purpose of achieving the maximum use of solar energy, consist of control mechanisms and systems which allow orienting a series of solar panels throughout the day such that the sun strikes them in a substantially perpendicular manner.
Utility model ES-A-1050814 relates to one of said solar trackers, which consists of a fixed platform defined by a circular rail held by columns which raise it off the ground and keep it leveled to allow a rotatable platform located above and provided with wheels, to rotate so as to be oriented in azimuth. This rotatable platform bears a plurality of solar panels arranged in rows and columns on a sloping surface. In turn, each of the rows of solar panels is rotatable about a shaft common to all of them, to be oriented from a vertical position in which they receive the solar rays at sunrise, until it reaches the most angled position at midday when the sun is highest. Additionally, the azimuth rotation of the mobile platform, simultaneous with that of the angling of the panels, is performed by having coupled to the wheels a geared motor, rotatable up to 210°, equivalent to fourteen hours of the apparent solar path, from sunrise to sunset.
Utility model ES-A-1059027 proposes a rotatable base for solar panel installations, formed by a U-shaped circular rail, on a fixed platform or bed plate held by pillars leveling it according to the orography of the area in which it is to be installed and, defined on the rail a mobile inclined structure with a plurality of solar panels arranged in rows and columns on this sloping surface. This inclined structure is attached and coupled to the fixed circular rail by means of perpendicular bearings providing it with angular mobility, as well as serving as a guide for the rotatable movement.
Both the base of the sloping surface of ES-A-1050814, i.e., what is referred to therein as rotatable platform, and the equivalent of ES-A-1059027, globally referred to as mobile inclined structure, are directly rotatably coupled to the respective circular rails, the diameter of said circular rails thus being substantially equal to the distance between the two slopes, which obliges design restrictions, especially with respect to span, which are desirable to be overcome.
Otherwise, the inclinations of the support slopes of the groups of solar panels of ES-A-1050814, and the distribution of the rows of panels determine that in certain periods of insolation the orientation of the panels causes a shadow on the neighboring panels with a loss in the yield of the installation.
Patent US-A-5191875 relates to a solar boiler including a solar panel pivotably coupled to a structure, which is rotatable with respect to a base incorporating a rail on which wheels fixed to the rotatable structure travel. The structure consists of a series of support arms and cross-members providing it with certain rigidity, but despite its configuration it also has the drawbacks of the two mentioned documents, i.e., the base of the structure is directly rotatably coupled to the respective circular rail, the diameter of the circular rail being substantially equal to the width of the structure and of the panel, which involves the mentioned design restrictions with respect to span.
Additionally, there are proposals aimed at reducing the angle of inclination of the sloping structure, for the purpose of reducing the area of panels facing the horizontal wind, the total height of the tracker, the overturning moment, all for the final benefit of achieving a potential savings of material in the structure due to the fact that the force of the wind would be less on a structure with less angle of inclination. For example in the previously mentioned utility models, said structure has an inclination of 13° in ES-A-1050814 and 28° in ES-A-1 059027.
The possible benefit achieved by building a sloping structure with a somewhat reduced inclination causes the drawback of having to provide a greater distance between the rows of panels to prevent the self-shadowing, which means that the length of the sloping structure also has to be increased (because it is necessary to increase the distance between rows), whereby the potential savings of material in the structure, since it does not have to withstand such strong forces of the wind as in structures with an larger angle of inclination, may be offset by the amount of additional material to be used due to the mentioned necessary increase of the length of the structure.
With respect to the rotation of the solar panels about a rotation shaft, there are different mechanisms responsible for carrying out such task, some of which rotate all the shafts of all the rows simultaneously, as is the case of the proposed mechanism in utility model ES-A-1050814.
Utility model ES-A-1046171 describes a mechanism responsible for pivoting a shaft of a number of solar panels, which mechanism is formed by a towline guided by pulleys moving a semicircular part coupled to said shaft.

It can be understood from the foregoing that the yield of a photovoltaic installation is not only conditioned by the use of efficient photovoltaic panels but that the support structure on which the panels are placed can make a substantial difference and allow reaching a more efficient yield.

Description of the Invention

The object of the present invention is to overcome the drawbacks of conventional solar trackers described in the previous section, providing a solar tracker with a more elaborate frame than those formed by the conventional simple sloping structure, which allows raising the mentioned sloping structure, and with it the rows of panels borne by the same, as well as avoiding the mentioned design restrictions, especially with respect to the span, enabling the span of the sloping structure, with respect to its width, to have greater dimensions than the diameter of the circular rail which allows rotating the solar tracker, while at the same time offering the solar tracker high robustness and resistance to the wind.

Additionally, another object of the present invention is to also provide a solar tracker the sloping structure of which has a larger inclination than that of conventional trackers, for the purpose of covering a smaller ground area, but which nevertheless is designed such that it offers good wind resistance characteristics.

To that end the present invention relates to a biaxial solar tracker, applicable to a photovoltaic solar installation, of the type comprising a horizontal fixed platform, bearing a circular track or rail, rolling elements supported on said rail and to which is attached a mobile frame including a sloping structure having associated thereto a plurality of solar panels, grouped in rows, the panels of each row being connected to corresponding support shafts, supported on said sloping structure, and means for moving the mentioned frame and the mentioned shafts to orient at all times the solar panels in accordance with a predetermined configuration.

As previously indicated, unlike conventional trackers in which the frame is the actual sloping structure which seats on the circular rail through the corresponding rolling elements, the frame of the solar tracker proposed by the present invention comprises:

- a base with said rolling elements attached thereto, and
- the sloping structure raised and seating on said base through intermediate elements spacing it from the mentioned fixed platform, and formed by two or more supporting beams, that delimit an oblique plane, which are separated from each other by a distance greater than the diameter of the circular rail.

The frame proposed by the invention allows, for a circular rail of one and the same diameter, offering a much greater oblique support plane for the rows of solar panels than that which is offered by conventional trackers, and therefore providing a larger solar capture surface than that of conventional trackers.

For a preferred embodiment the mentioned support shafts of the rows of solar panels project at their two ends beyond said supporting beams, whereby the total solar capture surface is even much larger as it is not limited to the width of the sloping structure, which in turn, as explained, is not limited to the diameter of the circular rail either.

For the purpose of combining the adequate mentioned characteristics of robustness and wind resistance, in the solar tracker proposed by the invention the mentioned supporting beams are inclined an angle substantially equal to the minimum angle of inclination adoptable by each panel plus the mean angle between said minimum angle of inclination and the maximum angle of inclination adoptable by each panel, all of said angles being taken with respect to the horizontal. By inclining the supporting beams with this angle, the length thereof is optimized, i.e., the shortest possible supporting beams are used without causing the mentioned self-shadowing.

It should be pointed out that providing a raised sloping structure, and hence a number of raised solar panels, allows avoiding the negative effects that possible irregularities or inclinations of the terrain in which the solar track is located may cause by projecting unwanted shadows in the panels closest to the ground.

For the purpose of designing and installing a photovoltaic solar installation from a plurality of solar trackers like that proposed by the present invention, solar trackers with respective raised sloping structures at different heights, depending on the location that each solar tracker is going to have, can be used to avoid the mentioned unwanted shadows caused by the irregularities or inclinations of the terrain, or by other adjacent solar trackers, or by other elements of the photovoltaic installation.

Brief Description of the Drawings

The previous and other advantages and features will be better understood from the following detailed description of several embodiments with reference to the attached drawings, which must be given an illustrative and non-limiting interpretation, and in which:

Figure 1 is a rear perspective view of the solar tracker proposed by the invention,

Figure 2 is a side elevation view of the solar tracker of Figure 1,

Figure 3 is a side elevation sectioned view of part of the solar tracker of Figure 2, showing the mechanism rotating the rows of solar panels about their rotation shafts, for one embodiment,

Figure 4 is an enlarged cross-section of part of a rail, inside which a rolling element of the proposed solar tracker moves,

Figure 5 is a side elevation view of part of the solar tracker proposed by the present invention for an alternative embodiment to that of Figure 1,

Figure 6 shows the elements of the solar tracker illustrated in Figure 5 plus the solar panels forming the different rows thereof,

Figure 7 is a front perspective view of the group of elements of the solar tracker illustrated in Figure 5, for the same embodiment, and

Figure 8 is a front perspective view of the same solar tracker illustrated by Figure 6.

Detailed Description of specific Embodiments

The attached figures illustrate two embodiments of the solar tracker proposed by the present invention, comprising a series of common elements, whereas they also have some alternative elements or configurations.

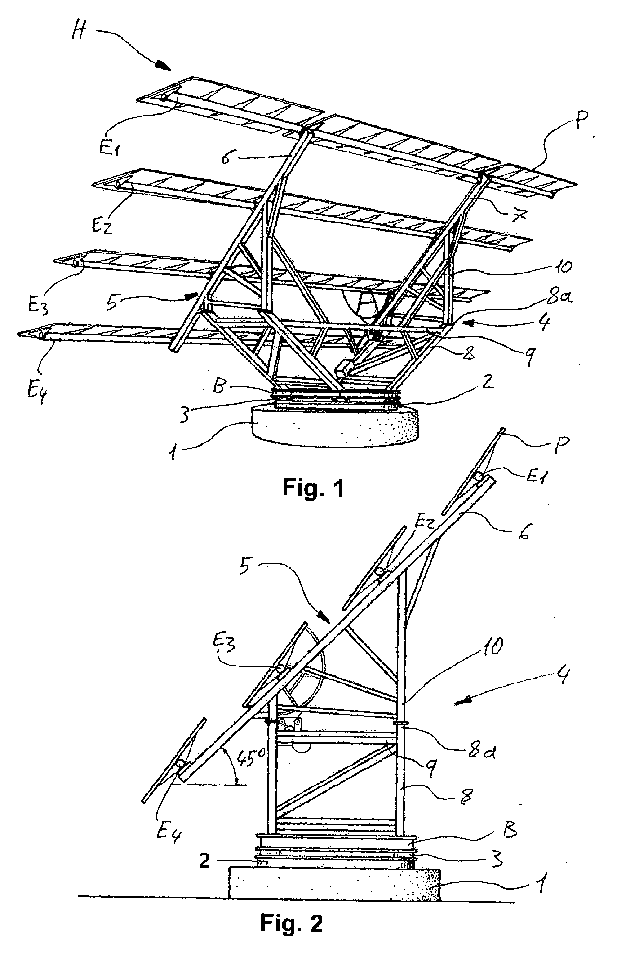

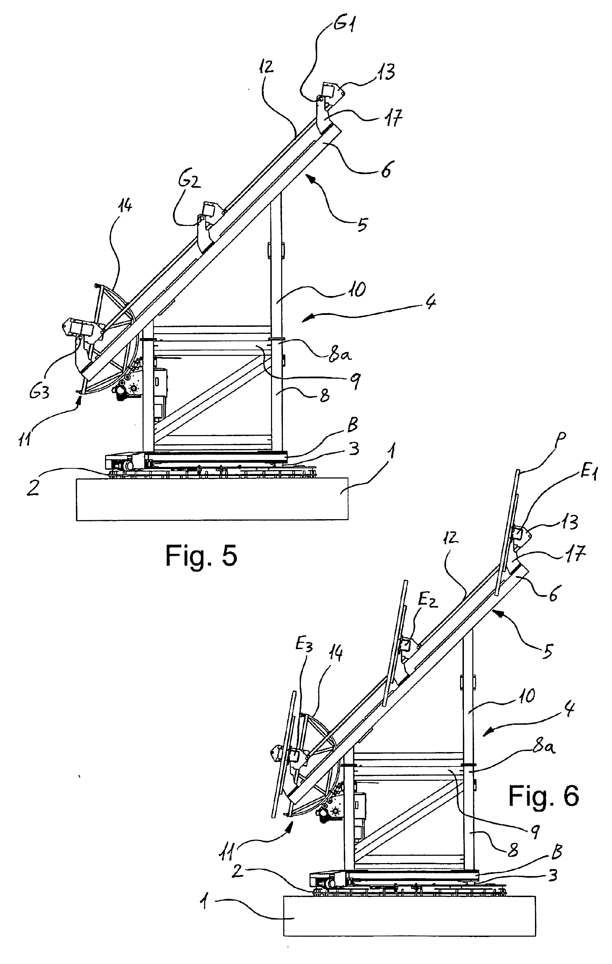

A first embodiment is illustrated in Figures 1 to 3, whereas a second embodiment is illustrated in Figures 5 to 8.

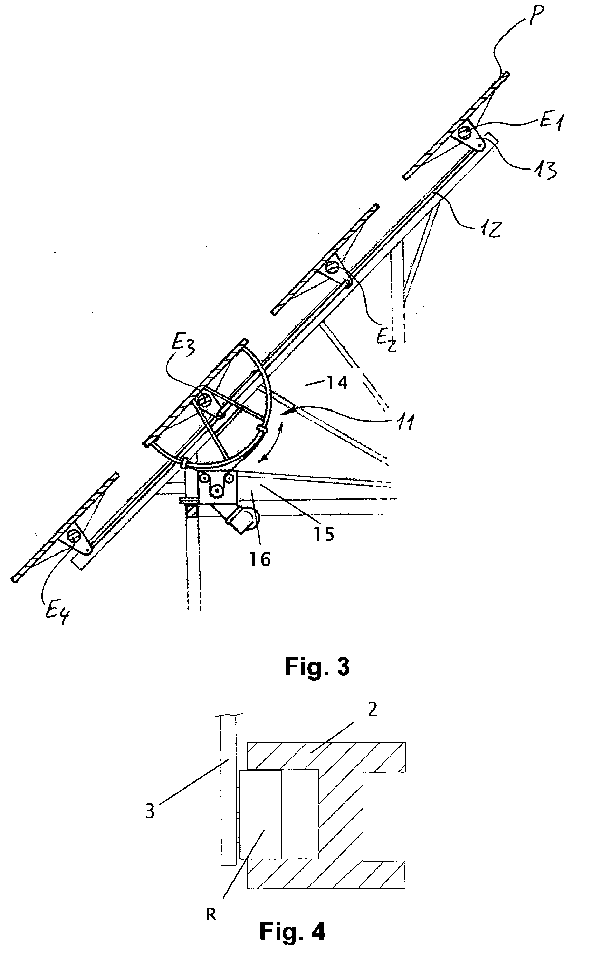

Both embodiments show the main elements forming the solar tracker proposed by the present invention which, as previously described, is of the type comprising a horizontal fixed platform 1, bearing a circular track or rail 2, rolling elements R (see Fig. 4) supported on said rail 2 and to which is attached a mobile frame 4 including a sloping structure 5 having associated thereto a plurality of solar panels P, grouped in rows H, the panels P of each row H being connected to corresponding support shafts, four in number $E_1$-$E_4$ for the first embodiment illustrated in Figures 1 to 3 and three in number for the second embodiment illustrated in Figures 5 to 8.

Each of said support shafts, $E_1$-$E_4$ or $E_1$-$E_3$, is supported on said sloping structure 5, and the solar tracker also comprises means for moving the mentioned frame 4 and the mentioned support shafts, $E_1$-$E_4$ or $E_1$-$E_3$, to orient at all times the solar panels P in accordance with a predetermined configuration.

In Figure 4 (common for both embodiments) it can be seen how one of the rolling elements R is introduced in the circular rail 2, and supported by a plate 3, which is in turn fixed to the base B of the mobile frame 4.

The frame 4 comprises a base B with said rolling elements R attached thereto and the sloping structure 5 is raised above said base B, at a distance from the mentioned fixed platform 1 and formed by two supporting beams 6, 7 that delimit an oblique plane and are separated from each other by a distance which, as can be seen in Figure 1, is greater than the diameter of the circular rail 2.

As discussed in a previous section, in the solar tracker proposed by the invention the mentioned supporting beams 6, 7 are inclined an angle substantially equal to the minimum angle of inclination adoptable by each panel P plus the mean angle between said minimum angle of inclination and the maximum angle of inclination adoptable by each panel P, all of said angles being taken with respect to the horizontal, i.e., the angle of inclination of the beams 6, 7 is equal to:

$$\text{Min. angle inclination of P} + \frac{(\text{min. angle inclination of P} + \text{max. angle inclination of P})}{2}$$

Said angles of inclination of the panels P are made possible, for the embodiment illustrated in Figures 1 to 3, since each row H of panels P pivots with respect to its respective support shaft $E_1$-$E_4$.

For both illustrated embodiments (see Figures 2, 3, 5 and 6) the supporting beams 6, 7 are inclined an angle of substantially 45 degrees, which is suitable for a minimum angle of inclination adoptable by each panel P of substantially 10 degrees and a maximum angle of inclination adoptable by each panel P of substantially 80 degrees.

For another embodiment, not illustrated, for which the panels P can be inclined between 10 and 90 degrees, the supporting beams 6, 7 are inclined an angle of substantially 50 degrees.

Said inclination of the beams 6, 7, i.e., of the sloping structure 5, combined with the fact that the support shafts, $E_1$-$E_4$ or $E_1$-$E_3$, of each row H of solar panels P are transverse to said supporting beams 6, 7 separated from each other by a sufficient distance, prevents the perpendicular incidence of the sun on the panels P of a row H from causing a shadow on another row of panels P in any of the positions adoptable by each row H of panels P, provided that said angle of inclination of the panels P is comprised between the minimum angle and the maximum angle which, for the illustrated embodiment, has been considered to be of 10 and 80 degrees, respectively.

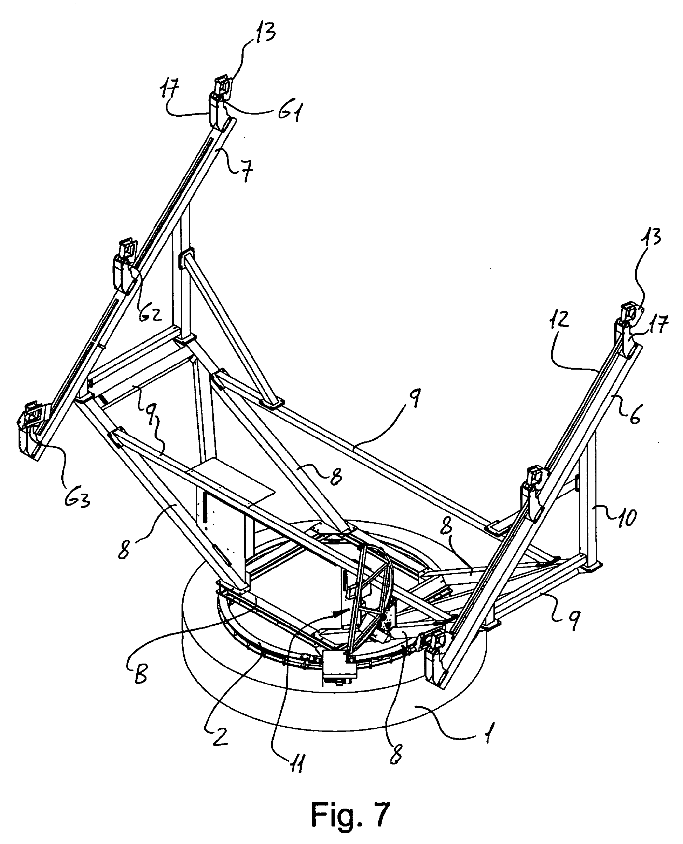

For the illustrated embodiments, it can be seen, especially in Figures 1 and 7, that the frame 4 comprises a starting portion integrating several divergent columns 8 (which in Figures 1 and 7 are four in number) joined at points close to their free ends 8a by transverse reinforcing beams 9 given them consistency.

The upper section or plane enlarged with respect to the base B, encompassed by said free ends 8a, defines a support for square parts or brackets 10 attached to said supporting beams 6, 7 forming the sloping structure 5, which thus seats on the base B through what is generally referred to in a previous section as intermediate elements which, for the described and illustrated embodiment, are formed by the mentioned divergent columns 8, attached in turn by the mentioned reinforcing beams 9.

In Figure 7 it is seen how the solar tracker therein illustrated has four of the mentioned reinforcing beams 9, although said number can be different for other embodiments not illustrated.

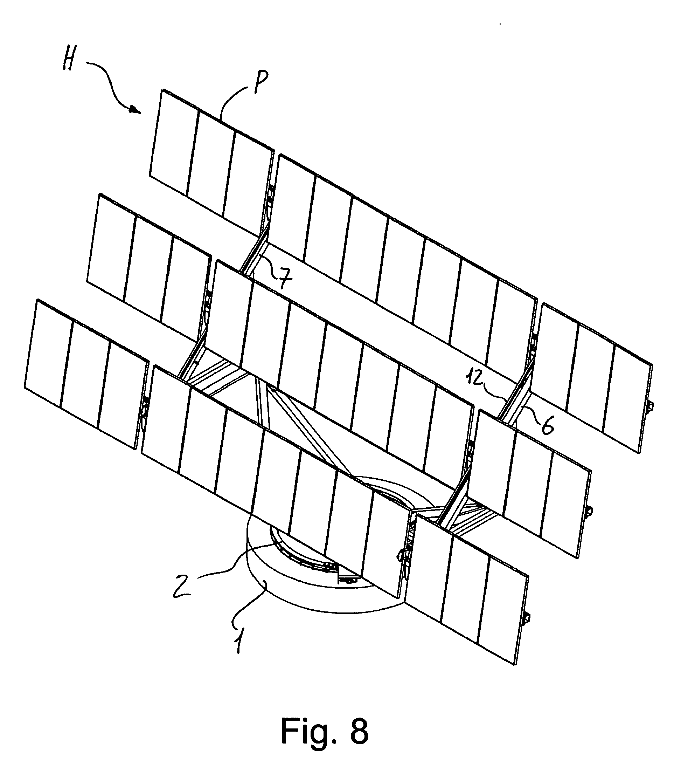

As previously mentioned, the span of the proposed solar tracker is not limited, in terms of width, to the distance between the supporting beams 6, 7, but rather, as seen in Figures 1 and 8, for several preferred embodiments, the support shafts, $E_1$-$E_4$ or $E_1$-$E_3$, of the rows H of solar panels P project at their two ends beyond said supporting beams 6, 7, thus providing a solar capture surface of a much greater width than the diameter of the circular rail 2.

Figure 7 illustrates a solar tracker with three support shafts $E_1$-$E_3$ and Figure 1 illustrates one with four support shafts $E_1$-$E_4$, as a depiction of two preferred embodiments, since the solar tracker proposed by the invention preferably has between three and five support shafts, with a minimum angle of inclination of the panels P of 10°, a maximum angle of elevation of the panels P of 80°, the assembly of panels P is between two and four times wider than it is high, and the angle of inclination of the sloping structure 5 is of 45°.

For the embodiments illustrated, the mentioned means for moving the support shafts, $E_1$-$E_4$, $E_1$-$E_3$, of the rows H of solar panels P comprise a driving mechanism 11 (seen in detail in Figure 3) applied, unlike the proposal in utility model ES-A-1050814, to a single shaft $E_3$ and a transmission mechanism formed by connecting rods 12 and levers 13 to transmit the movement to the other shafts ($E_1$, $E_2$, $E_4$ for the first embodiment and $E_1$, $E_2$ for the second embodiment).

The driving mechanism 11 also comprises, like in utility model ES-A-1046171, a semicircular part 14 adjoined to a panel P, but instead of using a towline moved along pulleys, it uses a chain 15 moved by a corresponding motor over gears or gear wheels 16.

For the mentioned first embodiment, illustrated in Figures 1 to 3, the support shafts $E_1$-$E_4$ act as rotation shafts of the panels P, the mentioned driving mechanism 11 and said transmission mechanism being configured to rotate the support shafts $E_1$-$E_4$, in this case of rotation, about themselves, for which purpose, as can be seen in Figure 3, each of said levers 13 is fixed at a first end to a respective one of said support shafts $E_1$-$E_4$ and articulated at a second end with respect to the end of one or more of said connecting rods 12 (the levers 13 of the end rows H each articulated to only one connecting rod 12, and the levers 13 of the intermediate rows H each articulated to two connecting rods 12).

As an alternative to what is described in the preceding paragraph, for the mentioned second embodiment, illustrated in Figures 5 to 8, the support shafts $E_1$-$E_3$ are not rotation shafts, but rather they are adapted to rotate with respect to parallel shafts $G_1$-$G_3$, the mentioned driving mechanism 11 and the mentioned transmission mechanism being configured to rotate the support shafts $E_1$-$E_3$ with respect to said parallel shafts $G_1$-$G_3$, for which purpose, as can be seen in Figures 5-7, each of said levers 13 is articulated at a first end to a respective one of said parallel shafts $G_1$-$G_3$, fixed at a portion at a distance from said first end to a respective one of said support shafts $E_1$-$E_3$ and articulated at a second end with respect to the end of one or more of said connecting rods 12.

The purpose of the configuration of a transmission mechanism such as the one described in the preceding paragraph for the second embodiment, i.e., the one that allows the rows H of solar panels P to not rotate about their respective support shaft $E_1$-$E_3$ (as is the case of the first embodiment illustrated in Figures 1 to 3), but rather with respect to a distanced or remote parallel shaft $G_1$-$G_3$, is to achieve that, in the event that a mechanical element of said transmission mechanism breaks, the rows H of solar panels P are positioned horizontally by gravity, pivoting with respect to their respective parallel or remote shaft $G_1$-$G_3$, in order to offer minimal wind resistance, i.e., it is possible for the rows H to offer a position of stable equilibrium in the horizontal position.

In Figure 7 it can be seen how the transmission mechanism described is arranged only on the supporting beam 6, although for other embodiments the possibility of arranging at least another similar transmission mechanism in the other supporting beam 7 is contemplated.

A person skilled in the art may introduce changes and modifications in the embodiments described without departing from the scope of the invention as it is defined in the attached claims.

**Claims**

1. A biaxial solar tracker, applicable to a photovoltaic solar installation, of the type comprising a horizontal fixed platform (1), bearing a circular track or rail (2), rolling elements (R) supported on said rail (2) and to which is attached a mobile frame (4) including a sloping structure (5) having associated thereto a plurality of solar panels (P), grouped in rows (H), the panels (P) of each row (H) being connected to corresponding support shafts ($E_1,...E_n$), which are rotatable or adapted to rotate with respect to another parallel shaft ($G_1,...G_n$), supported on said sloping structure (5), and means for moving the mentioned frame (4) and the mentioned support shafts ($E_1,...E_n$) to orient at all times the solar panels (P) in accordance with a predetermined configuration, **characterized in that** the frame (4) comprises a base (B) with attached thereto said rolling elements (R) and **in that** the sloping structure (5) is raised above said base (B), at a distance from the mentioned fixed platform (1) and formed by at least two supporting beams (6, 7) that delimit an oblique plane and are separated from each other by a distance greater than the diameter of the circular rail (2).

2. The solar tracker according to claim 1, **characterized in that** said supporting beams (6, 7) are inclined an angle substantially equal to the minimum angle of inclination adoptable by each panel (P) plus the mean angle between said minimum angle of inclination and the maximum angle of inclination adoptable by each panel (P), all of said angles being taken with respect to the horizontal.

3. The solar tracker according to claim 2, **characterized in that** said supporting beams (6, 7) are inclined an angle of substantially 45 degrees, said minimum angle of inclination adoptable by each panel (P) is of substantially 10 degrees and said maximum angle of inclination adoptable by each panel (P) is of substantially 80 degrees, all of said angles being taken with respect to the horizontal.

4. The solar tracker according to claim 2, **characterized in that** said supporting beams (6, 7) are inclined an angle of substantially 50 degrees, said minimum angle of inclination adoptable by each panel (P) is of substantially 10 degrees and said maximum angle of inclination adoptable by each panel (P) is of substantially 90 degrees, all of said angles being taken with respect to the horizontal.

5. The solar tracker according to claim 2, 3 or 4, **characterized in that** said support shafts ($E_1,...E_n$) of each row (H) of solar panels (P) are transverse to said supporting beams (6, 7) separated from each other by a sufficient distance so that in none of the positions adoptable by each row (H) of panels (P) does the perpendicular incidence of the sun on the panels (P) of a row (H) cause a shadow on another row of panels (P), provided that said angle of inclination of the panels (P) is comprised between the minimum angle and the maximum angle.

6. The solar tracker according to claim 1, **characterized in that** the frame (4) comprises a starting portion integrating several divergent columns (8) joined at points close to their free ends (8a) by transverse reinforcing beams (9), the upper section which is enlarged with respect to the base (B), encompassed by said free ends (8a), defining a support for square parts or brackets (10) attached to said supporting beams (6, 7) forming the sloping structure (5).

7. The solar tracker according to claim 1, **characterized in that** said means for moving the support shafts ($E_1,...E_n$) of the rows (H) of solar panels (P) comprise a driving mechanism (11) applied to a shaft ($E_3$) and a transmission mechanism formed by connecting rods (12) and levers (13) to transmit the movement to the other shafts.

8. The solar tracker according to claim 7, **characterized in that** said driving mechanism (11) and said transmission mechanism are configured to rotate said support shafts ($E_1,...E_n$) about themselves, each of said levers (13) being fixed at a first end to a respective one of said support shafts ($E_1,...E_n$) and articulated at a second end with respect to the end of at least one of said connecting rods (12).

9. The solar tracker according to claim 7, **characterized in that** said driving mechanism (11) and said transmission mechanism are configured to rotate said support shafts ($E_1,...E_n$) with respect to said parallel shafts ($G_1,...G_n$), each of said levers (13) being articulated at a first end to a respective one of said parallel shafts ($G_1,...G_n$), fixed at a portion at a distance from said first end to a respective one of said support shafts ($E_1,...E_n$) and articulated at a second end with respect to the end of at least one of said connecting rods (12).

10. The solar tracker according to claim 1, **characterized in that** said support shafts ($E_1,...E_n$) of the rows (H) of solar panels (P) project at their two ends beyond said supporting beams (6, 7).

**Fig. 1**

**Fig. 2**

**Fig. 3**

**Fig. 4**

Fig. 5

Fig. 6

## Fig. 7

Fig. 8

# INTERNATIONAL SEARCH REPORT

| | International application No. |
|---|---|
| | PCT/ ES 2007/000712 |

## A. CLASSIFICATION OF SUBJECT MATTER

***F24J 2/54*** (2006.01)

According to International Patent Classification (IPC) or to both national classification and IPC

## B. FIELDS SEARCHED

Minimum documentation searched (classification system followed by classification symbols)

F24J

Documentation searched other than minimum documentation to the extent that such documents are included in the fields searched

Electronic data base consulted during the international search (name of data base and, where practicable, search terms used)

CIBEPAT,EPODOC, WPI

## C. DOCUMENTS CONSIDERED TO BE RELEVANT

| Category* | Citation of document, with indication, where appropriate, of the relevant passages | Relevant to claim No. |
|---|---|---|
| X | ES 1063906 U (MAGAN DE LA ROCHA JUSTINO) 16.12.2006, the whole document. | 1-6, 10 |
| Y | | 7-9 |
| Y | WO 2007011442 A1 (ARIZONA PUBLIC SERVICE COMPANY) 25.01.2007, page 10, line 10 - page 12, line 19 and figures. | 7-9 |
| X | ES 2253099 A1 (LAHUERTA ROMERO MANUEL) 16.05.2006, description and figures. | 1-6, 10 |
| Y | | 7-9 |
| Y | WO 2007011442 A1 (ARIZONA PUBLIC SERVICE COMPANY) 25.01.2007, page 10, line 10 - page 12, line 19 and figures. | 7-9 |
| X | US 6443145 A (BURON et al.) 03.09.2002, column 2, line 52 - column 3, line 45;column 4, line 54 - column 6, line 9 and figures. | 1-6, 10 |

☒ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 09 May 2008      (09.05.2008) | **(14/05/2008)** |

| Name and mailing address of the ISA/ | Authorized officer |
|---|---|
| O.E.P.M. | L. Sanz Tejedor |
| Paseo de la Castellana, 75 28071 Madrid, España. Facsimile No.  34 91 3495304 | Telephone No. +34 913 498 533 |

Form PCT/ISA/210 (second sheet) (April 2007)

## INTERNATIONAL SEARCH REPORT

| International application No. |
| --- |
| PCT/ES 2007/000712 |

| C (continuation). | DOCUMENTS CONSIDERED TO BE   RELEVANT |  |
| --- | --- | --- |

| Category* | Citation of documents, with indication, where appropriate, of the relevant passages | Relevant to claim No. |
| --- | --- | --- |
| A | US 4129360 A (DEFLANDRE et al.) 12.12.1978, the whole document. | 1-10 |
| A | ES 1061185 U (SOTEL S L) 16.01.2006, the whole document. | 1-10 |

Form PCT/ISA/210 (continuation of second sheet) (April 2007)

## INTERNATIONAL SEARCH REPORT

Information on patent family members

| | International application No. |
|---|---|
| | PCT/ ES 2007/000712 |

| Patent document cited in the search report | Publication date | Patent family member(s) | Publication date |
|---|---|---|---|
| WO 2007011442 A | 25.01.2007 | US 2007012312 A<br>US 7252083 B<br>EP 1904795 A<br>EP 20060758724 | 18.01.2007<br>07.08.2007<br>02.04.2008<br>28.04.2006<br>28.04.2006 |
| ES 2253099 AB | 16.05.2006 | EP 1632786 A<br>EP 20050380190<br>US 2006054162 A<br>MX P | 08.03.2006<br>30.08.2005<br>16.03.2006<br>17.05.2006<br>17.05.2006 |
| US 6443145 B | 03.09.2002 | US 2002023638 A | 28.02.2002 |
| US 4129360 A | 12.12.1978 | JP 52109951 A<br>FR 2356169 AB | 14.09.1977<br>20.01.1978<br>20.01.1978 |
| ES 1063906 U U | 16.12.2006 | NONE | ------------ |
| ES 1061185 U | 16.01.2006 | ES 1061185 Y | 01.10.2006<br>01.10.2006<br>01.10.2006 |

Form PCT/ISA/210 (patent family annex) (April 2007)

**EP 2 090 848 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 1050814 A
- ES 1059027 A
- US 5191875 A
- ES 1046171 A